# EUROPEAN PATENT SPECIFICATION

(11) **EP 1 817 833 B1**
(45) Date of publication and mention of the grant of the patent: **25.11.2009**
(21) Application number: 05797297.8
(22) Date of filing: 13.09.2005
(51) Int. Cl.: H02K 15/02, B65H 3/32, B21D 43/24

(54) **PROCESS FOR MAKING A LAMINATION STACK FOR MANUFACTURING ARMATURES OF ELECTRICAL MACHINES AND DEVICE FOR CARRING OUT SAID PROCESS**
PROZESS ZUR HERSTELLUNG EINES GESTAPELTEN BLECHPAKETS ZUR HERSTELLUNG VON ANKERN ELEKTRISCHER MASCHINEN UND GERÄT ZUR AUSFÜHRUNG DES PROZESSES
PROCEDE DE PRODUCTION D'UN NOYAU FEUILLETE DESTINE A LA FABRICATION D'ARMATURES DE MACHINES ELECTRIQUES, ET DISPOSITIF DE MISE EN OEUVRE DUDIT PROCEDE

(30) Priority: 29.11.2004 IT SV20040041
(43) Date of publication of application: 15.08.2007
(73) Proprietor: Dema S.R.L., 17019 Varazze (IT)
(72) Inventor: BIGNOTTI, Daniele, I-17019 VARAZZE (IT); SOLOPERTO, Massimo, I-17019 VARAZZE (IT)
(74) Representative: Karaghiosoff, Giorgio Alessandro
(86) International application number: PCT/EP2005/054558
(87) International publication number: WO 2006/056498

(56) References cited:
- EP-A- 1 443 006
- DD-A1- 243 801
- US-A- 3 687 303
- US-A- 3 826 348
- US-A- 4 311 424
- US-A- 5 722 154
- US-A- 6 003 860

## Description

The present invention relates to a process for making a lamination stack for manufacturing armatures of electrical machines.

Processes of said type are known and widely used, they have some drawbacks despite such devices accomplish their task in a satisfactory manner.

At present processes for making a lamination stack provides the presence of a lamination storage wherein laminations are overlapped and are separated from the lamination set at the storage bottom.

At present laminations are often realized by shearing the lamination from a flat plate and this manufacturing process cause laminations to have a transverse bending lengthwise the lamination, or warping or bowing that is laminations have a bending radius that is substantially perpendicular to the lamination surface, due to the natural deformation of lamination during shearing action.

Said bending occurs on all laminations, and whose stacking in the vertical lamination storage consequently causes all storage laminations to bend producing considerable problems when the lamination stack is moved and particularly when separating and collecting the selected amount of laminations corresponding to the predetermined size of the lamination stack in the direction parallel to the axis orthogonal to the surface determined by the lamination plan shape, and making the lamination stack.

Because of weight reasons laminations in the vertical lamination storage have a bending that is compressed and actually it disappears in laminations at the base of the storage and subjected to weight of above laminations. The lack of such bending causes a tension inside storage laminations, which are forced in a flat position, that is laminations at bottom of the lamination storage and which are those selected for making the lamination stack. Storage laminations tend to bend again at the region separating the selected amount of laminations from vertical storage laminations during the separating process for making the lamination stack. The selected amount of laminations corresponding to the predetermined size of the lamination stack in a direction parallel to the axis orthogonal to the surface determined by the lamination plan shape, as said according to prior art is indeed separated from lamination storage at the bottom thereof, economically using the force of gravity to move storage laminations, however when the selected amount of laminations is selected and separated for making the lamination stack it is not more subjected to the compression action of vertical storage laminations, and therefore substantially all laminations of the lamination stack tend to naturally bend again.

This often causes errors in selecting the amount of laminations corresponding to the predetermined size of the lamination stack in a direction parallel to the axis orthogonal to the surface determined by the lamination plan shape, or alternatively it requires a very precise control in order to be sure of having selected an amount of laminations corresponding to the predetermined size of lamination stack in a direction parallel to the axis orthogonal to the surface determined by the lamination plan shape of laminations, making a lamination stack having an amount corresponding to the desired predetermined size of the lamination stack in a direction parallel to the axis orthogonal to the surface determined by the lamination plan shape, hence storage and stack laminations are guided, when sliding, by vertical guides having a fixed position and engaging in grooves on laminations. However the presence of bending due to previous shearing processing causes lamination grooves to have different mutual distances when the lamination is in the flat position and when on the contrary it is bent (think about the length of a rectilinear segment that afterwards is bent, points at segment end have different distances if the segment lies on a straight line or on a circumference arc).

Recently in the field of electrical machines there is the need to have laminations of a considerable length, and the length thereof has been passed from about ten centimeters over twenty centimeters, to laminations of thirty or forty centimenters length or more. This causes a further drawback when laminations are processed by a conventional machine according to prior art, a possible tilt due to an interference with guides, while the lamination goes down in vertical storage, can indeed easily cause the lamination to have opposite free ends at very different heights: a tilt of the lamination of one degree indeed affects a little a lamination of ten centimeters length, on the contrary on a lamination of thirty or forty centimeters length it causes a size difference of some centimeters between ends of the lamination. As a result this leads to the fact that laminations can be wrongly separated and assembled one with the other, running the risk that the device can stop in order to indicate the trouble, or that the lamination is automatically welded in a wrong position, and therefore it has to be rejected since it is faulty.

The considerable length often causes laminations to jam in vertical sliding guides that usually are provided in the lamination storage, interfering with the usual carrying out of operation sequence and they need frequently maintenance, as said at the region separating the lamination stack from storage laminations the selected amount of laminations to make the lamination stack is not more submitted to weight of above laminations, and therefore it tends to bend again, stressing sliding guides and causing a slowdown or even a situation where one or more laminations of the selected amount of laminations, corresponding to the predetermined size of the lamination stack in a direction parallel to the axis orthogonal to the surface determined by the lamination plan shape, jam in sliding guides, as a result causing a slowdown of the production cycle or a stop thereof, in order to control if no lamination of the selected amount of laminations is jammed in storage guides.

Process for making a lamination stack for manufacturing armatures of electrical machines, by means of an automatic precision dimensioning of the lamination stack with respect to the size of said lamination stack in a direction parallel to the axis orthogonal to the surface determined by the lamination plan shape, said dimensioning consisting in separating a laminations subset intended to compose the stack and assembling said lamination subset having a predetermined size of said lamination stack from a lamination set having a greater size with respect to said lamination stack,
comprising the following steps:
a. positioning laminations upon an horizontal supporting top associated to the lamination storage making an horizontal lamination set wherein said laminations are substantially placed one near the other, such to make a set of laminations horizontally arranged;
b. pushing the lamination set against an abutment or stop of the lamination storage by a pushing head;
d. separating a selected amount of laminations corresponding to the predetermined size of the lamination stack in a direction parallel to the axis orthogonal to the surface determined by the lamination plan shape of a lamination stack starting from the horizontal set of laminations;
e. assembling or translating the selected amount of laminations corresponding to the predetermined size of the lamination stack to make a lamination stack.

The operation for selecting the predetermined amount of laminations corresponding to the predetermined size of the lamination stack in a direction parallel to the axis orthogonal to the surface determined by the lamination plan shape of laminations, as said, is obstructed by bending thereof, and so it has the drawback of requiring a very strong and accurate device for selecting the proper amount of laminations corresponding to the predetermined size of the lamination stack in a direction parallel to the axis orthogonal to the surface determined by the lamination plan shape of laminations.

Lamination storage according to prior art has one or more vertical sliding guides extending through all the vertical storage and guide laminations when going down towards the region for selecting and separating storage laminations. However the presence of the natural bending of laminations that brings near grooves thereof engaging in fixed sliding guides of the storage, often causes a jam when laminations go down, or it can cause a partial tilt of one or more laminations that take unexpected positions, as a result slowing down the cycle of production and/or causing stops thereof and/or stacking errors.

The present invention aim is to realize a process for making a lamination stack for manufacturing armatures of electrical machines overcoming easily and in an inexpensive way drawbacks of known processes for manufacturing armatures of electrical machines, by means of an automatic precision dimensioning of the lamination stack with respect to the size of said lamination stack in a direction parallel to the axis orthogonal to the surface determined by the lamination plan shape, said dimensioning consists in separating a lamination subset intended to compose the stack and assembling said lamination subset having a predetermined size of said lamination stack in a direction parallel to the axis orthogonal to the surface determined by the lamination plan shape from a lamination set having a greater size with respect to said lamination stack.

The invention achieves above mentioned aims with a process according to claim 1.

According to the process as defined in claim 1 there is provided an horizontal set of laminations arranged one near the other and edgewise supported in a substantially horizontal lamination storage. Thus drawbacks related to prior art process are eliminated, the weight of laminations in the lamination storage do not indeed rest on laminations to be separated from the storage for making the lamination stack, but lamination set in lamination storage is stopped before the selected amount of laminations is separated, this involving a more easy separation operation, wherein the weight of lamination set in lamination storage do not interfere with the operation. As a result the operation is more easy and accurate, and therefore the processing time is less, since controls can be fewer than on a conventional machine.

It is possible to provide the size of said lamination stack in a direction parallel to the axis orthogonal to the surface determined by the lamination plan shape selected with rerefence to said predetermined size of stack (or alternatively with reference to the number of laminations). In the first case a predetermined size of laminations in a direction parallel to the axis orthogonal to the surface determined by the lamination plan shape is indeed selected, thus problems related to the presence of a high processing tolerance, causing laminations to have different thicknesses one with respect to the other are advantageously eliminated. The selection made on the direction parallel to the axis orthogonal to the surface determined by the lamination plan shape cause lamination stacks to have the same size measured in the direction parallel to the axis orthogonal to the surface determined by the lamination plan shape, without referring to the number of laminations constituting the lamination stack, therefore various lamination stacks will have always the same size measured in the direction parallel to the axis orthogonal to the surface determined by the lamination plan shape, but they can be composed even of a different number of laminations. (On the contrary when manufacturing individual laminations if processing tolerances are small, it is possible to provide the selection carriying out for a predetermined number of laminations for each lamination stack that is lower than the total number of laminations in the lamination set in the storage. Thus each lamination stack is composed of the same number of laminations.)

Moreover the presence of a lamination storage wherein laminations are susbtantially horizontally arranged allows laminations obtained by shearing, and therefore having a natural bending, to maintain their bending, since being supported edgewise do not receive stresses eliminating the bending. (Thus there can be advantageously provided horizontal translating guides, associated to all the lamination storage and arranged at such mutual distances that they easily interface with notches or grooves provided on laminations.) The presence of an horizontal storage cause laminations not to assume the flat position during selection and so notches or grooves are always at the same distance one with respect to the other and the sliding on horizontal guides of storage is made easier. Thus all operations for separating and assembling the selected amount of laminations corresponding to the predetermined size of the lamination stack in a direction parallel to the axis orthogonal to the surface determined by the lamination plan shape from the lamination set for making the lamination stack are more easy and effective.

According to a further feature of the process of claim 1 according to the present invention there is provided on the selected amount of laminations corresponding to the predetermined size of the lamination stack in a direction parallel to the axis orthogonal to the surface determined by the lamination plan shape, to be separated, a "combing" operation made by means of a so called "comb", which makes the separation operation very accurate and reliable. The "combing" operation is essentially a movement by translation for separating and assembling the selected amount of laminations corresponding to the predetermined size of the lamination stack in a direction parallel to the axis orthogonal to the surface determined by the lamination plan shape starting from the lamination storage, which is carried out at the upper edge of laminations by means of a member performing a translating movement in the direction separating the lamination stack dragging or skimming the upper peripheral edge of laminations with a predetermined force and translating the selected amount of laminations corresponding to the predetermined size of the lamination stack in a direction parallel to the axis orthogonal to the surface determined by the lamination plan shape of laminations of the lamination storage separating them from the lamination set and assembling the selected amount of laminations corresponding to the predetermined size of the lamination stack in a direction parallel to the axis orthogonal to the surface determined by the lamination plan shape for making the lamination stack. Such operation, that according to an alternate process can be advantageosuly carried out twice, made the separation operation very effective since it allows a fast and accurate sliding of laminations upon sliding guides, laminations are indeed separated by means of a force which is applied at the upper edge and allows laminations to tilt upon guides however without stopping at the separation point. Morevoer the fact that said operation is twice provided leads to a further advantage: in the first "combing" laminations that possibly have not been selected or that wrongly jam on the sliding guide due to poor friction, by means of the second "combing" are advantageously collected again and assembled with the lamination stack in the making. Thus the operation for separating and assembling laminations starting from the lamination storage to the lamination stack is more sure and reliable, since the possibility that casual jams or blockings occur is very low.

Combing has the task to separate only the proper amount of laminations corresponding to the predetermined size of the lamination stack according to the above definition (or alternatively a predetermined number of laminations). The separation of said stack spaces out stack laminations from the lamination set in the storage only to the extent sufficient to introduce moving means at the back of the last lamination faced towards the lamination stack in the storage reliably performing the translation of laminations of the separated stack in a compacting and discharge station.

According to a further preferred feature of the process according to the present invention there is provided a translation of the lamination stack in a compacting and discharge station wherein the lamination stack rotates of about 90°. Thus the lamination stack is in vertical position, that is the same of a lamination stack obtained by means of a conventional vertical storage process. It is further provided to move the lamination stack from the moving and discharge station to a welding station wherein laminations constituting the lamination stack are welded one with the other and possibly moved from the welding station to a cycle output station, that can be composed for example of an output conveyor belt or rollers or the like.

Features of the invention and advantages derived therefrom will be more clear from the following detailled description of detailled figures in which:
Fig.1 is a front view of the lamination set in the lamination storage
Fig.2 is a plan view of the lamination set in the lamination storage
Fig.3 is a front view of the device according to the present invention
Fig.4 is a structural detail relevant to the region where laminations are separated and assembled according to the present invention
Fig.5 is a front view of the device according to the present invention wherein comb and translators can be noted
Fig.6 is a side view of the device according to the present invention
Fig.7 is a whole side view of the device according to the present invention
Fig.8 is a structural detail of the device according to the present invention

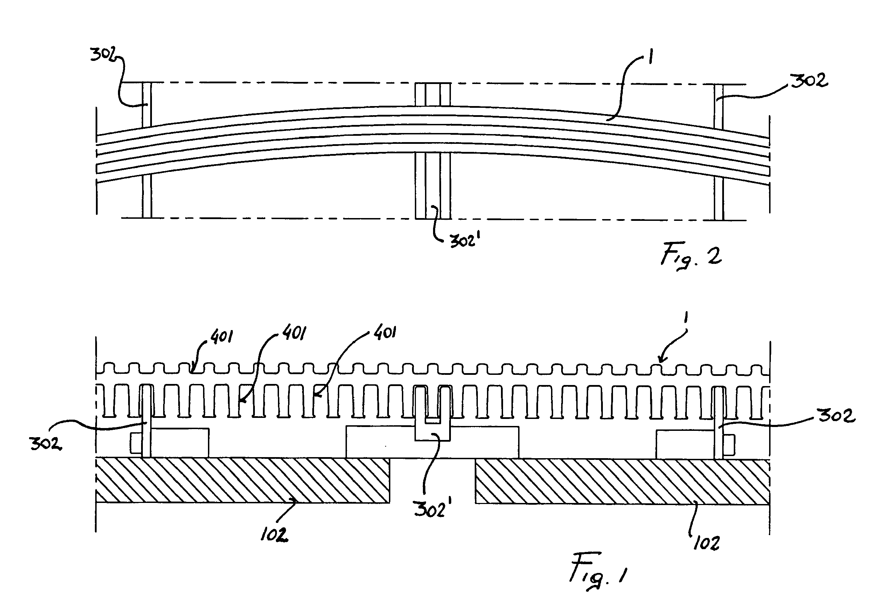

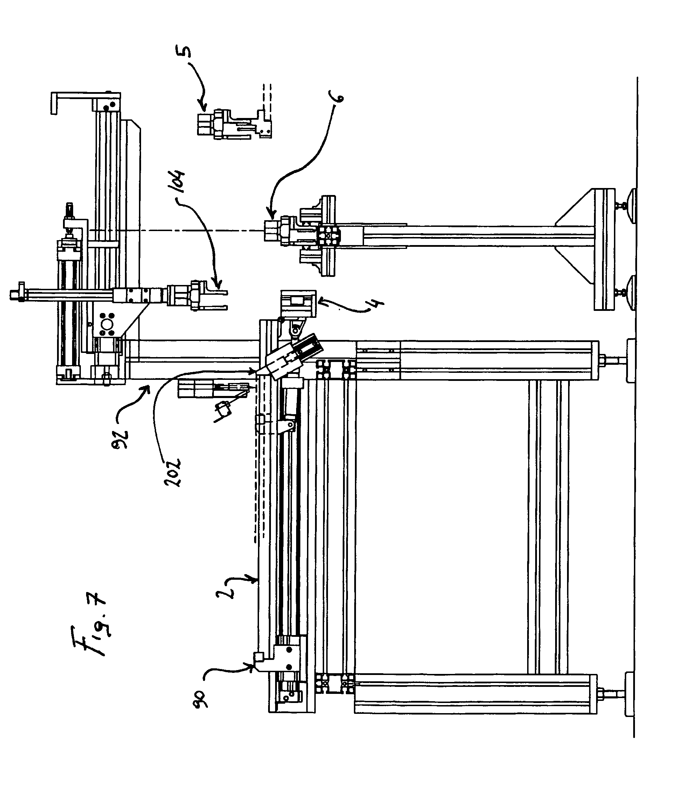

In figures 1 to 8 a device for making a lamination stack in a preferred embodiment is shown. Particularly fig.7 shows the device wherein the horizontal lamination storage 2 can be noted providing an horizontal development structure wherein the lamination set 201 slides towards the abutment or stop means 202. The lamination set is pushed or moved by means of proper and known pneumatic, hydraulic and/or electrical devices, such as pneumatic, hydraulic rams or electrical motors preferably electronically driven acting at the end part of the lamination set 201 of the lamination storage by means of a pushing head 90 pushing the end portion of the lamination set in the lamination storage towards the lock point or stop point 202.

The device according to the present invention provides a bridge head 92 that can be translated at least in one direction bearing at least a retainer 8, a so called comb 7 and at least a translator 9. In a preferred embodiment said bridge head 92 stands above an end portion of the lamination storage at a region corresponding substantially to the region where the selected amount of laminations is separated from the lamination set. The bridge head 92 preferably has the possibility to make vertical, horizontal and oblique translations, such to assist or carry out all movements or part thereof necessary to realize the process according to the present invention. Moreover it is provided that the retainer 8, the comb 7, and translator/translators 9 are mounted such to be translated on said bridge head 92, such to perform movements necessary to carry out the process according to the present invention.

Particularly, according to a preferred embodiment the bridge head 92 can translate horizontally and vertically, the retainer 8 can translate vertically with respect to the bridge head 92 upon which it is mounted, the comb 7 can translate vertically and horizontally with respect to the bridge head 92 upon which it is mounted, and the translator 9 can translate vertically and horizontally with respect to the bridge head 92 upon which it is mounted.

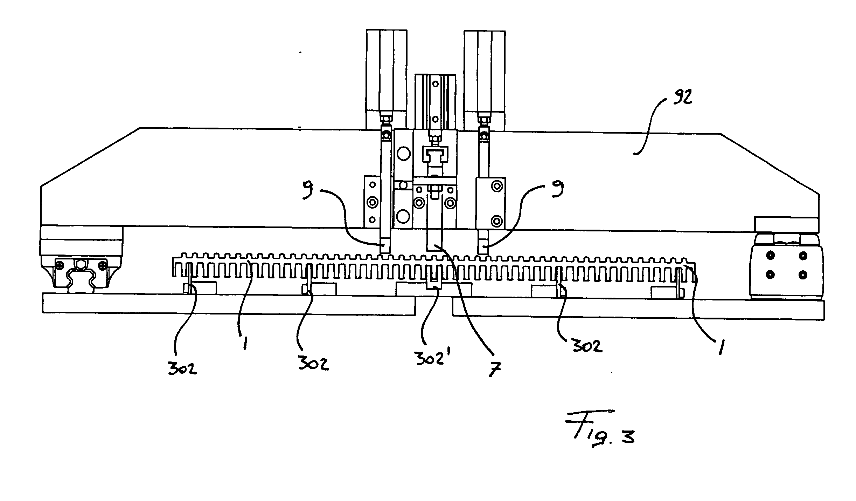

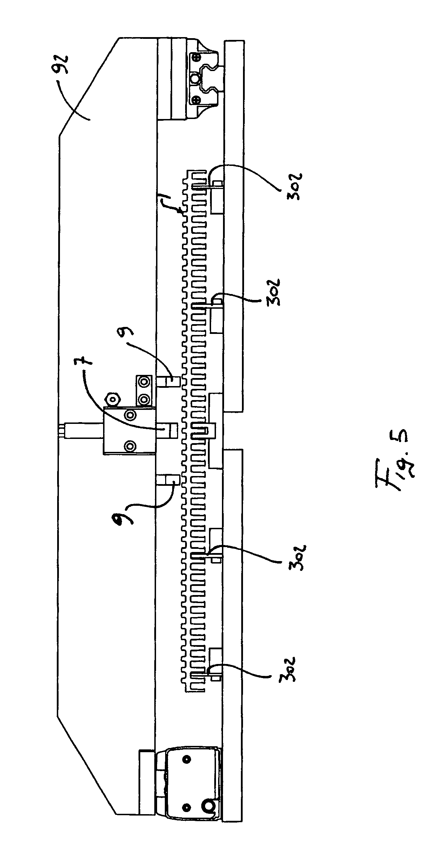

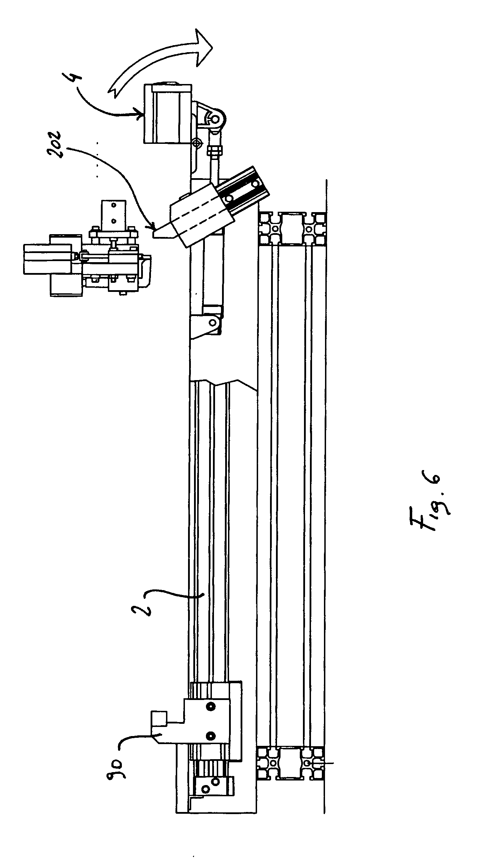

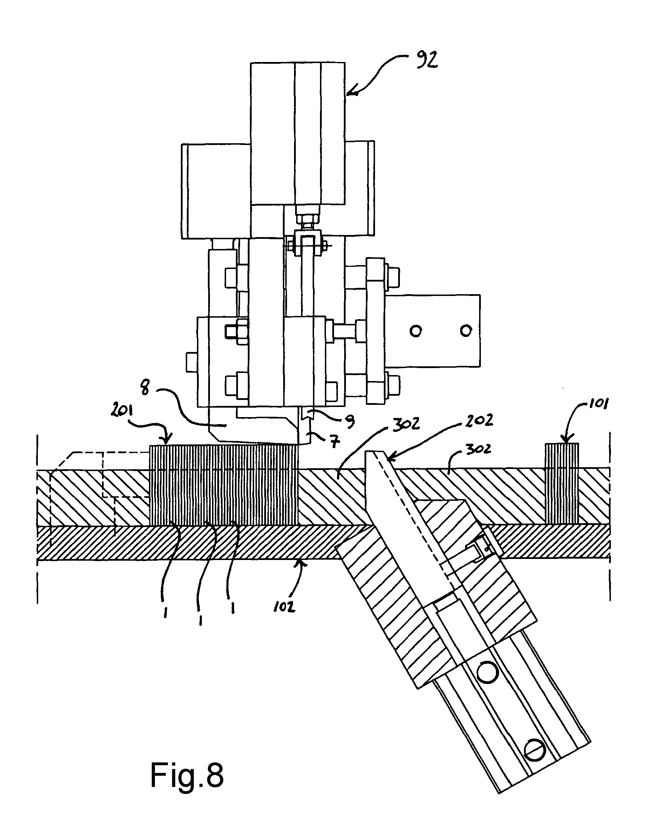

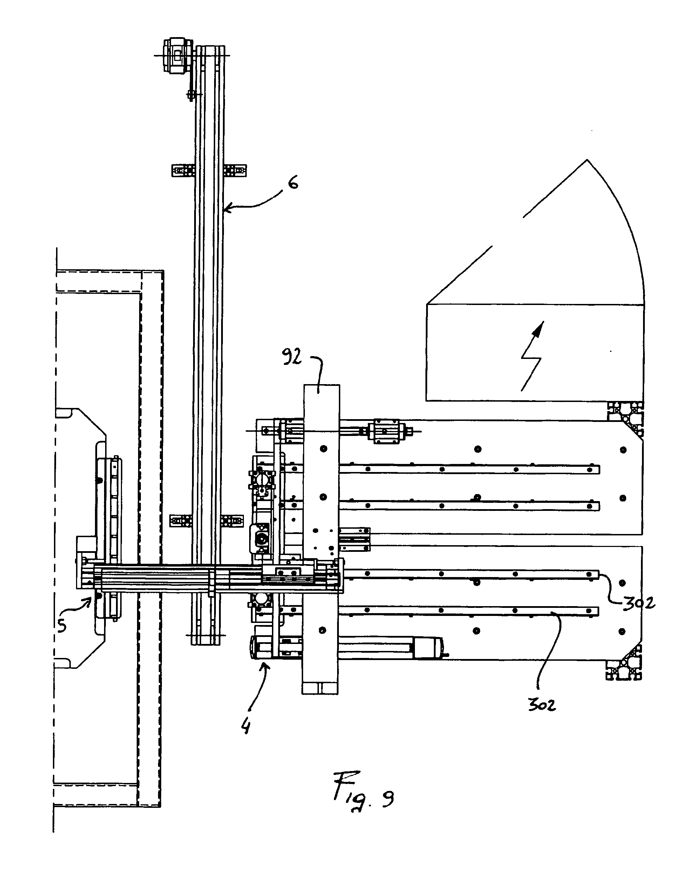

The retainer 8 is preferably placed in the center portion of the bridge head or structure 92, standing above the end part of the lamination storage 2, as shown also in figs. 3 and 5. The lamination storage at the lower region, that corresponds to the storage floor, is provided with one or more horizontal sliding guides 302, 302' shown in fig.5 and fig. 8 for sliding laminations in the lamination storage. In fig. 6 there is shown the abutment or stop point 202 against which the lamination set of the lamination storage 2 is pushed.

The separation, combing and assembling operation is carried out by means of the retainer 8 that vertically translates downwards starting from the rest position with which it is drawn back towards the bridge of the device stopping the lamination portion not to be selected, as shown, and by means of comb 7.

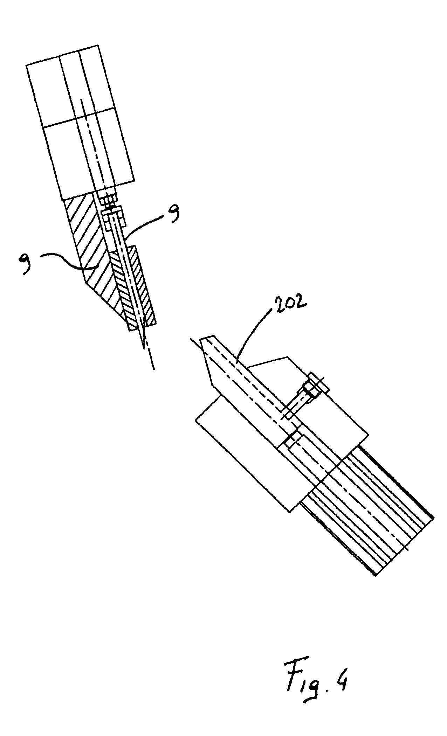

In fig. 6 and fig. 4 it can be also noted the presence and the preferred embodiment of comb 7 and translating means or translators 9. The comb 7 has a substantially tapered shape at its free end that translates downwards going down in contact with upper edges of laminations beyond the retainer 8.

The end of comb 7 has a tapering preferably directed towards the abutment or stop point 202, such to carry out an operation "combing" laminations that will form the lamination stack 101. In fig. 4 and fig. 5 there are also shown translating means 9 that in the shown embodiment are composed of fork means placed laterally to two opposite sides of comb 7 and are also placed at the bridge region of the device.

Movements of retainer 8, comb 7, translators 9, stop point 202 are carried out by means of known pneumatic, hydraulic, and/or electrical and/or electrohydraulic devices that can be advantageously driven by means of a central processing unit wherein a control software is loaded or loadable, said central processing unit can advantageosuly be integrated in the device or can be separated from the device and can be on a separated control unit.

The abutment or stop point 202 shown in fig. 8 is preferably placed at the median portion of laminations and it can be translated in a substantially vertical direction such that, when it is in the lowered position, it allows the sliding of the lamination stack 101 on translating guides 302, 302', towards the compacting and discharge station 4 shown in fig. 6. Said compacting and discharge station houses the lamination stack 101 and it has means for making a rotation of about 90° around a fixed point or fulcrum particularly around an axis parallel to the longitudinal axis of laminations, as shown in fig. 6, thus allowing a rotation of lamination stack 101 of about 90°.

It can be also noted the presence of moving means 104 preferably of the gripper type shown in fig. 7 picking up the lamination stack 101 from the compacting and discharge station 4 after the rotation has occurred and conveying the lamination stack towards a welding station 5, wherein lamination stack is welded by means of known tecniques. Preferably by means of moving means 104 laminations are conveyed from the welding station 5 to an output cycle station 6 in the present embodiment composed of a conveying belt placed between the compacting and discharge station 4 and the welding station 5.

In figure 1 there is shown the floor 102 of the lamination storage 2 shown in fig. 7, a lamination 1 in front view having along its peripheral edge a set of grooves 401 to which sliding guides 302, 302' can be coupled. In fig.2, substantially showing a top view of fig. 1, it is possible to note the bending of laminations 1, taken because of the shearing action needed for manufacturing thereof. The bending is one of the causes for malfunctioning of vertical storage devices according to prior art, the weight of laminations in vertical storage indeed rests on laminations that are in lower regions of vertical storage, and consequently the weight eliminates lamination bending and causes problems above described.

In the device according to the present invention on the contrary the storage 2 is placed substantially horizontally as shown in fig. 7, and laminations 1 slide on suitable sliding guides 302, 302' at the floor of the lamination storage 2 and are placed at such mutual distances that grooves 401 on laminations in bent position perfectly interface with said guides. Particularly in order to provide an optimum centering it is provided for the central guide 302' to have a substantially U shape, as shown in fig. 1. Thus laminations 1 slide on guides 302, 302' substantially keeping an horizontal position and edgewise supported on guides, so that the natural bending of laminations do not cause problems during translation thereof.

The device according to the present invention provides also the presence of a retainer 8 shown in fig. 8. Referring again to fig. 8 it can be understood how the process according to the invention is carried out by means of the device just described: the lamination set 201 composed of individual laminations 1 that are put one near the other and edgwise supported horizontally slide on said horizontal guides 302, 302' pushed by pushing means 90, till the first lamination of the lamination set 201 abuts against the abutment or stop means 202, that is in the lifted position. Now pushing means stop and the retainer 8 goes down by means of a vertical translation to block the lamination set 201 at a region corresponding to the comb, so that the lamination set 201 is stopped inside the lamination storage 2 and the translation of the lamination set 201 of the lamination storage 2 on guides is prevented at the region between said retainer 8 and said pushing means 90. Therefore a certain amount of laminations corresponding to the predetermined size of the lamination stack in a direction parallel to the axis orthogonal to the surface determined by the lamination plan shape that will make the actual lamination stack 101 will remain beyond the retainer 8 in the part opposite to the lamination storage 2.

Now in the preferred process the abutment or stop means 202 goes down by a substantially vertical translation, arriving about at lamination storage floor level, allowing the free sliding on guides of the selected amount of laminations corresponding to the predetermined size of the lamination stack in a direction parallel to the axis orthogonal to the surface determined by the lamination plan shape that will make the lamination stack.

Particularly according to a preferred process it is provided that the abutment or stop means 202 goes down after the retainer 8 has gone down to stop the lamination stack and before the comb 7 works.

Said selected amount of laminations corresponding to the predetermined size of the lamination stack in a direction parallel to the axis orthogonal to the surface determined by the lamination plan shape beyond the retainer 8 is therefore separated by the lamination set by means of a so called "combing" operation consisting in a translating movement applied by a so called "comb" 7, shown in fig.4, acting at the upper edge of the selected amount of laminations corresponding to the predetermined size of the lamination stack in a direction parallel to the axis orthogonal to the surface determined by the lamination plan shape: the comb 7 goes down by a vertical translation from its rest position to meet upper edges of the selected amount of laminations corresponding to the predetermined size of the lamination stack in a direction parallel to the axis orthogonal to the surface determined by the lamination plan shape, and said comb 7 then makes an horizontal translation dragging on movement all or part of the selected amount of laminations corresponding to the predetermined size of the lamination stack in a direction parallel to the axis orthogonal to the surface determined by the lamination plan shape that will make the lamination stack. The horizontal translation of the comb drags laminations in the amount of laminations corresponding to the predetermined size of the lamination stack in a direction parallel to the axis orthogonal to the surface determined by the lamination plan shape towards the compacting and discharge station 4 and separating thereof from the lamination set 201, already stopped.

The combing operation can be advantageously made at least twice so that the separation of laminations constituting the selected amount of laminations corresponding to the predetermined size of the lamination stack in a direction parallel to the axis orthogonal to the surface determined by the lamination plan shape is really accurate.

The further step of the process provided according to the present invention is the assembling or translation of the selected amount of laminations corresponding to the predetermined size of the lamination stack in a direction parallel to the axis orthogonal to the surface determined by the lamination plan shape, and said assembling or translating operation is carried out by means of translating means 9 shown also in figs. 3 and 4. Said translators go down by means of a vertical translation downwards and then translate horizontally pushing the selected amount of laminations corresponding to the predetermined size of the lamination stack in a direction parallel to the axis orthogonal to the surface determined by the lamination plan shape and assembling them in the actual lamination stack 101.

Now the lamination stack 101 made in this manner is horizontally translated, eventually again by means of translators 9 on translating guides 302, 302' as shown in fig. 8.

Now the process provides the upwards translation of the abutment or stop means 202, the release of the lamination set 201 in the lamination storage 2 by means of an upwards translation of the retainer 8 therefore disengaging the lamination set 201, that can be further slided or horizontally translated on guides 302, 302' by the action of the pushing head 90 untill restarting the above descrived cycle.

The made lamination stack 101, in a preferred embodiment, can be translated on guides to a moving station 4 providing to rotate the lamination stack 101 of about 90°. Thus the lamination stack made by the process and the device according to the present invention is perfectly the same regarding even the position as a lamination stack made by a conventional process, and advantageously the present device can be associated to a conventional chain of production, for example by moving means preferably of the gripper type 104 picking up the lamination stack 101 from the moving station 4 and conveying them to a welding station 5, where the known process welding laminations is carried out and from the welding station to a cycle output station 6.

It can be also noted in figs. 1 to 8 the presence of a flat region to use as lamination storage 2 having at least a supporting top called floor 102 of the lamination storage 2 and at least an abutment or stop means 202 for making a stop or abutment of the lamination storage 2 and at least one, preferably two separating means to separate a selected size of the lamination stack in a direction parallel to the axis orthogonal to the surface determined by the lamination plan shape from a lamination set.

Said separating means can be advantageously composed of a "combing" means or comb 7 and a translating means 9 as said.

Said means for carrying out the "combing" operation, and said comb 7, is intended to move by translating a selected amount of laminations corresponding to the predetermined size of the lamination stack in a direction parallel to the axis orthogonal to the surface determined by the lamination plan shape starting from the lamination storage 2.

It can be noted in fig. 8 that said comb 7 has a substantially triangular shape cross section and moreover it is movable in the vertical and longitudinal or horizontal direction and it faces on the lamination set at the upper edge of the lamination set at the region where the selected amount of laminations corresponding to the predetermined size of the lamination stack in a direction parallel to the axis orthogonal to the surface determined by the lamination plan shape separates from the lamination set. Morevoer at the region corresponding to the free end said comb in a preferred embodiment has a substantially triangular cross section, preferably a right-angled triangle shape with the hypotenuse of said triangle faced towards the direction separating the selected amount of laminations corresponding to the predetermined size of the lamination stack in a direction parallel to the axis orthogonal to the surface determined by the lamination plan shape from said lamination set.

Referring to figs. 1 and 2 it is possible to note that laminations are provided with at least one groove, preferably more grooves, 401 along the peripheral edge and an horizontal sliding guide 302, 302' in combination with the lamination storage is provided that can be associated or coupled to said groove 401 of the peripheral edge of said laminations.

In fig.8 there is also shown said retainer 8 for the stop of the lamination set, that is movable in the vertical direction and it faces on the lamination set at the upper edge of said lamination set and it has in a preferred embodiment a free end for pressure coupling with the lamination set substantially having an L-shaped cross section. Moreover in fig. 8 it is possible to note that said retainer 8 has an L-shaped free end facing on the lamination set such that the edge engaging with laminations of said free end is slightly tilted, so that the contact between the edge and the lamination set substantially occurs only at one lamination, that is the one immediately before the comb 7. This arrangement allows a contact region that is very limited and it allows the laminations set to stop exactly at the provided point, that is the comb 7, unlike the completely flat profile.

Therefore the comb 7, in the preferred embodiment, makes a movement sequence composed of: a going down, translating movement in the opposite direction than the lamination set, it makes a going back up movement and it returns to its starting position by means of a translation towards the lamination set stopped by the retainer 8. In the preferred embodiment providing a double combing, said movement provides repeating the movement sequence discussed above.

Again in fig. 8 it is possible to note the stop or abutment point 202 for the lamination set 201, said stop or abutment point 202 can be moved in a substantially vertical direction, so that sliding of the lamination stack can be made free by the action of the comb 7 and then translators that in a preferred and shown embodiment are made with two translating tips arranged laterally the comb 7.

It is possible for all operations or steps of the process to be synchronized one with respect to the other and made by means of a control software in a control processing unit, that can be advantageosuly integrated in the device or that can be in a separated control unit, said software being loaded or loadable in a computer central memory, there being provided means and/or position sensors for input/output of control signals and/or command signals, means for transforming said control/command signal in a corresponding control or command being further provided, for controlling and/or commanding individual operation/operations constituting the process according to the present invention.

## Claims

1. Process for making a lamination stack (101) for manufacturing armatures of electrical machines, by means of an automatic precision dimensioning of the lamination stack with respect to the size of said lamination stack in a direction parallel to the axis orthogonal to the surface determined by the lamination plan shape, said dimensioning consisting in separating a laminations subset intended to compose the stack and assembling said lamination subset having a predetermined size of said lamination stack in a direction parallel to the axis orthogonal to the surface determined by the lamination plan shape from a lamination set having a greater size with respect to said lamination stack,
**characterized in that** it comprises the following steps:
a. positioning laminations (1) upon an horizontal supporting top associated to the floor (102) of a lamination storage (2) making an horizontal lamination set (201) wherein said laminations have the edge of the longest side faced towards the surface of the supporting top associated to the lamination storage floor (102) and substantially placed one near the other, such to make a set of laminations (201) horizontally arranged;
b. pushing the lamination set (201) against an abutment or stop (202) of the lamination storage (2) by a pushing head (90);
c1. blocking a part of the lamination set upstream of a lamination subset directly adjacent to the abutment or stop (202) by a retainer (8) movable in the vertical direction and facing on the lamination set at the upper edge of said lamination set and said lamination subset having the predetermined size for said lamination stack in a direction parallel to the axis orthogonal to the surface determined by the lamination plan shape;
said retainer (8) stopping the lamination set by pressure coupling with the lamination set and having an L-shaped free end facing on the lamination set, the edge engaging with laminations of said free end being slightly tilted, so that the contact between the edge and the lamination set substantially occurs only at the lamination immediately before the comb 7;
c2. moving the abutment or stop (202) in a substantially vertical direction to allow the sliding of the lamination stack (101);
d. separating a selected amount of laminations corresponding to the predetermined size of the lamination stack in a direction parallel to the axis orthogonal to the surface determined by the lamination plan shape of a lamination stack (101) starting from the horizontal set of laminations (201) ;
wherein step d. comprises also a so called "combing" operation, that is a movement by translation for separating and assembling the selected amount of laminations corresponding to the predetermined size of the lamination stack in a direction parallel to the axis orthogonal to the surface determined by the lamination plan shape of laminations starting from the lamination storage, such combing operation being carried out by means of a member performing a translating movement in the direction separating the lamination stack dragging or skimming the upper peripheral edge of the laminations with a predetermined force and translating the selected amount of laminations corresponding to the predetermined size of the lamination stack in a direction parallel to the axis orthogonal to the surface determined by the lamination plan shape of laminations of the lamination storage separating them from the lamination set and assembling the selected amount of laminations corresponding to the predetermined size of the lamination stack in a direction parallel to the axis orthogonal to the surface determined by the lamination plan shape for making the lamination stack;
e. assembling or translating the selected amount of laminations corresponding to the predetermined size of the lamination stack in a direction parallel to the axis orthogonal to the surface determined by the lamination plan shape of laminations to make a lamination stack (101); moving the abutment or stop (202) in a substantially vertical direction to prevent the lamination stack from moving beyond the abutment or stop (202) in a direction parallel to the axis orthogonal to the surface determined by the lamination plan shape when pushed as set out in step b)
f. releasing the lamination set (201) in the lamination storage (2) by means of an upwards translation of the retainer (8);
g. restarting a new cycle by repeating steps b. to f.

2. Process according to claim 1 wherein a second step d) operation is further provided.

3. Process according to claim 1 or claim 2 **characterized in that** it has further the following steps:
translating the lamination stack (101) in a moving station (4) :
rotating the lamination stack of about 90°.

4. Process according to the preceding claim **characterized in that** it further provides the following steps:
moving the lamination stack from the moving station (4) to a welding station (5);
welding laminations constituting the lamination stack one with the other.

5. Process according to the preceding claim **characterized in that** it further provides the following step:
moving the welded lamination stack from the welding station (5) to a cycle output station (6).

6. Process according to claim 4, **characterized in that** said movement between said moving station (4) and said welding station (5) are made by means of moving means.

7. Process according to claim 6, **characterized in that** said moving means are gripper means (104).

## Patentansprüche

1. Verfahren zur Herstellung eines gestapelten Blechpakets (101) zur Herstellung von Ankern von Elektromaschinen mittels einer automatischen Präzisions-Dimensionierung des Blechpakets in Bezug auf die Größe des Blechpakets in einer Richtung parallel zu der Achse orthogonal zu der Fläche, die von der Blechgrundrissform bestimmt wird, wobei die Dimensionierung des Blechpakets darin besteht, dass ein Blech-Teilsatz, der dafür bestimmt ist, das Paket zu bilden, von einem Blechsatz mit einer in Bezug auf das Blechpaket größeren Größe getrennt wird, und der Blech-Teilsatz mit einer vorbestimmten Größe des Blechpakets in einer Richtung parallel zu der Achse orthogonal zu der Fläche, die von der Blechpaket-Grundrissform bestimmt wird, zusammengesetzt wird,
**dadurch gekennzeichnet, dass** es die folgenden Schritte umfasst:
a. Positionieren von Blechen (1) auf einem horizontalen Trägeraufsatz, der mit dem Boden (102) eines Blechlagers (2) verbunden ist, wodurch ein horizontaler Blechsatz (201) gebildet wird, wobei die Bleche mit der Kante der längsten Seite zu der Oberfläche des mit dem Blechlagerboden (102) verbundenen Trägeraufsatzes hin weisen und im Wesentlichen nahe beieinanderliegend platziert sind, so dass ein Blechsatz (201) gebildet wird, der horizontal angeordnet ist;
b. Schieben des Blechsatzes (201) gegen eine Stoßfläche oder einen Anschlag (202) eines Blechlagers (2) durch einen Schiebekopf (90);
c1. Blockieren eines Teils des Blechsatzes oberhalb eines Blech-Teilsatzes direkt angrenzend an die Stoßfläche oder den Anschlag (202) durch eine in vertikaler Richtung bewegliche und dem Blechsatz an der oberen Kante des Blechsatzes zugewandte Feststelleinrichtung (8), und wobei der Blech-Teilsatz die vorbestimmte Größe für das Blechpaket in einer Richtung parallel zu der Achse orthogonal zu der Fläche, die von der Blechgrundrissform bestimmt wird, aufweist;
wobei die Feststelleinrichtung (8) den Blechsatz durch Druckverbindung mit dem Blechsatz stoppt und ein L-förmiges freies Ende aufweist, das dem Blechsatz zugewandt ist, wobei die Kante, welche mit dem freien Ende der Bleche in Eingriff tritt, leicht schräg gestellt ist, so dass der Kontakt zwischen der Kante und dem Blechsatz im Wesentlichen nur an dem Ankerblech unmittelbar vor dem Kamm (7) erfolgt;
c2. Bewegen der Stoßfläche oder des Anschlags (202) in einer im Wesentlichen vertikalen Richtung, um die Verschiebung des Blechpakets (101) zu erlauben;
d. Trennen einer ausgewählten Menge an Blechen, welche der vorbestimmten Größe des Blechpakets in einer Richtung parallel zu der Achse orthogonal zu der Fläche, die von der Blechgrundrissform eines Blechpakets (101) bestimmt wird, entspricht, und zwar ausgehend von dem horizontalen Blechsatz (201);
wobei der Schritt d. auch einen sogenannten "Kämm"-Vorgang, das heißt eine Translationsbewegung umfasst, um die ausgewählte Menge an Blechen, welche der vorbestimmten Größe des Blechpakets in einer Richtung parallel zu der Achse orthogonal zu der Fläche, die von der Blechgrundrissform von Blechen bestimmt wird, entspricht, zu trennen und zusammenzusetzen, und zwar ausgehend von dem Blechlager, wobei ein solcher Kämmvorgang mittels eines Elements durchgeführt wird, das eine Translationsbewegung in der Richtung durchführt, dass das Blechpaket getrennt wird, wobei die obere Umfangskante der Bleche mit einer vorbestimmten Kraft weggezogen oder abgehoben wird und die ausgewählte Menge an Blechen, die der vorbestimmten Größe des Blechpakets entspricht, in einer Richtung parallel zu der Achse orthogonal zu der Fläche, die von der Blechgrundrissform von Blechen des Blechlagers bestimmt wird, verschoben wird, so dass sie von dem Blechsatz getrennt wird, und wobei die ausgewählte Menge an Blechen, die der vorbestimmten Größe des Blechpakets entspricht, in einer Richtung parallel zu der Achse orthogonal zu der Fläche, die von der Blechgrundrissform bestimmt wird, zusammengesetzt wird, um das Blechpaket zu bilden;
e. Zusammensetzen oder Verschieben der ausgewählten Menge an Blechen, die der vorbestimmten Größe des Blechpakets entspricht, in einer Richtung parallel zu der Achse orthogonal zu der Fläche, die von der Blechgrundrissform der Bleche bestimmt wird, um ein Blechpaket (101) zu bilden;
Bewegen der Stoßfläche oder des Anschlags (202) in einer im Wesentlichen vertikalen Richtung, um das Blechpaket daran zu hindern, sich in einer Richtung parallel zu der Achse orthogonal zu der Fläche, die von der Blechgrundrissform bestimmt wird, über die Stoßfläche oder den Anschlag (202) hinaus zu bewegen, wenn sie, wie in Schritt b) erläutert, geschoben wird;
f. Freigeben des Blechsatzes (201) in dem Blechlager (2) mittels einer Aufwärtsverschiebung der Feststelleinrichtung (8);
g. Beginnen eines neuen Arbeitszyklus durch Wiederholen der Schritte b. bis f.

2. Verfahren nach Anspruch 1, wobei weiterhin ein zweiter Vorgang gemäß Schritt d) vorgesehen ist.

3. Verfahren nach Anspruch 1 oder Anspruch 2, **dadurch gekennzeichnet, dass** es weiterhin die folgenden Schritte aufweist:
Verschieben des Blechpakets (101) in einer Verfahrstation (4);
Drehen des Blechpakets um ungefähr 90°.

4. Verfahren nach dem vorangehenden Anspruch, **dadurch gekennzeichnet, dass** es die folgenden weiteren Schritte bereitstellt:
Befördern des Blechpakets von der Verfahrstation (4) zu einer Schweißstation (5);
Verschweißen der einzelnen Bleche, aus denen das Blechpaket gebildet wird.

5. Verfahren nach dem vorangehenden Anspruch, **dadurch gekennzeichnet, dass** es weiterhin den folgenden Schritt bereitstellt:
Befördern des verschweißten Blechpakets von der Schweißstation (5) zu einer Zyklus-Ausgabestation (6).

6. Verfahren nach Anspruch 4, **dadurch gekennzeichnet, dass** die Beförderung zwischen der Verfahrstation (4) und der Schweißstation (5) durch eine Beförderungseinrichtung erfolgt.

7. Verfahren nach Anspruch 6, **dadurch gekennzeichnet, dass** die Beförderungseinrichtung eine Greifeinrichtung (104) ist.

## Revendications

1. Procédé de fabrication d'une pile de feuilletages (101) pour fabriquer des armatures de machines électriques, au moyen d'un dimensionnement de précision automatique de la pile de feuilletages par rapport à la taille de ladite pile de feuilletages dans une direction parallèle à l'axe orthogonal à la surface déterminée par la forme plane des feuillages, ledit dimensionnement consistant en séparant un sous-ensemble de feuilletages destiné à constituer la pile et à assembler ledit sous-ensemble de feuilletages ayant une taille prédéterminée de ladite pile de feuilletages dans une direction parallèle à l'axe orthogonal à la surface déterminée par la forme plane de feuilletages à partir d'un ensemble de feuilletages ayant une plus grande taille par rapport à ladite pile de feuilletages,
**caractérisé en ce qu'**il comprend les étapes suivantes:
a. positionner des feuilletages (1) sur un dessus de support horizontal associé au plancher (102) d'un dispositif de stockage de feuilletages (2) en réalisant un ensemble de feuilletages horizontal (201), où lesdits feuilletages ont un bord du côté le plus long orienté vers la surface du dessus de support associé au plancher de stockage de feuillages (102) et placer sensiblement l'un près de l'autre de manière à réaliser un ensemble de feuilletages (201) agencé horizontalement;
b. pousser l'ensemble de feuillages (201) contre une butée ou arrêt (202) du dispositif de stockage de feuillages (2) par une tête de poussée (90);
c1. bloquer une partie de l'ensemble de feuilletages en amont d'un sous-ensemble de feuilletages directement adjacent à la butée ou arrêt (202) par un organe de retenue (8) déplaçable dans la direction verticale et orienté vers l'ensemble de feuilletages au bord supérieur dudit ensemble de feuilletages, et ledit sous-ensemble de feuilletages ayant la taille prédéterminée pour ladite pile de feuilletages dans une direction parallèle à l'axe orthogonal à la surface déterminée par la forme plane des feuilletages;
ledit organe de retenue (8) arrêtant l'ensemble de feuilletages par un couplage de pression avec l'ensemble de feuilletages et ayant une extrémité libre en forme de L orientée vers l'ensemble de feuilletages, le bord venant en prise avec les feuilletages de ladite extrémité libre étant légèrement incliné de sorte que le contact entre le bord et l'ensemble de feuilletages se produit sensiblement seulement au feuilletage directement avant le peigne (7);
c2. déplacer la butée ou l'arrêt (202) dans une direction sensiblement verticale pour permettre le coulissement de la pile de feuilletages (101);
d. séparer la quantité de feuilletages sélectionnée correspondant à la taille prédéterminée de la pile de feuilletages dans une direction parallèle à l'axe orthogonal à la surface déterminée par la forme plane de la pile de feuilletages (101) en commençant à partir de l'ensemble horizontal de feuilletages (201);
où l'étape d. comprend également une soi-disant opération "de peignage", c'est-à-dire un mouvement de translation pour séparer et assembler la quantité sélectionnée de feuilletages correspondant à la taille prédéterminée de la pile de feuilletages dans une direction parallèle à l'axe orthogonal à la surface déterminée par la forme plane des feuilletages en commençant à partir du dispositif de stockage de feuilletages, une telle opération de peignage étant exécutée par un élément exécutant un mouvement de translation dans la direction séparant la pile de feuilletages en traînant ou en écrémant le bord périphérique supérieur des feuilletages avec une force prédéterminée et en translatant la quantité sélectionnée de feuilletages correspondant à la taille prédéterminée de la pile de feuilletages dans une direction parallèle à l'axe orthogonal à la surface déterminée par la forme plane des feuilletages du dispositif de stockage de feuilletages en les séparant de l'ensemble de feuilletages et en assemblant la quantité de feuilletages sélectionnée correspondant à la taille prédéterminée de la pile de feuilletages dans une direction parallèle à l'axe orthogonal à la surface déterminée par la forme plane de feuilletage pour réaliser la pile de feuilletages;
e. assembler ou translater la quantité sélectionnée de feuilletages correspondant à la taille prédéterminée de la pile de feuilletages dans une direction parallèle à l'axe orthogonal à la surface déterminée par la forme plane des feuilletages pour réaliser une pile de feuilletages (101); déplacer la butée ou l'arrêt (202) dans une direction sensiblement verticale pour empêcher que la pile de feuilletages se déplace au-delà de la butée ou de l'arrêt (202) dans une direction parallèle à l'axe orthogonal à la surface déterminée par la forme plane des feuilletages lors de la poussée, comme exposé à l'étape b); f. libérer l'ensemble de feuilletages (201) dans le dispositif de stockage de feuilletages (2) par une translation vers le haut de l'organe de retenue (8);
g. recommencer un nouveau cycle en répétant les étapes b. à f.

2. Procédé selon la revendication 1, dans lequel une deuxième opération de l'étape d) est réalisée en outre.

3. Procédé selon la revendication 1 ou la revendication 2, **caractérisé en ce qu'**il comporte en outre les étapes suivantes:
translater la pile de feuilletages (101) dans une station de déplacement (4);
faire tourner la pile de feuilletages selon environ 90°.

4. Procédé selon la revendication précédente, **caractérisé en ce qu'**il exécute en outre les étapes suivantes:
déplacer la pile de feuilletages de la station de déplacement (4) à une station de soudage (5);
souder les feuilletages constituant la pile de feuilletages les uns aux autres.

5. Procédé selon la revendication précédente, **caractérisé en ce qu'**il réalise en outre l'étape suivante:
déplacer la pile de feuilletages soudés de la station de soudage (5) à une station de sortie de cycle (6).

6. Procédé selon la revendication 4, **caractérisé en ce que** ledit déplacement entre ladite station de déplacement (4) et ladite station de soudage (5) sont réalisés par des moyens de déplacement.

7. Procédé selon la revendication 6, **caractérisé en ce que** lesdits moyens de déplacement sont des moyens de préhension (104).
